**Europäisches Patentamt**

**European Patent Office**

**Office européen des brevets**

(19)

(11) Veröffentlichungsnummer: **0 212 386 B1**

(12) **EUROPÄISCHE PATENTSCHRIFT**

(45) Veröffentlichungstag der Patentschrift:
27.09.89

(51) Int. Cl.⁴: **H02K 15/02**

(21) Anmeldenummer: 86110623.5

(22) Anmeldetag: 31.07.86

(54) **Paketierungsvorrichtung für Blechpakete, insbesondere für geschränkte Rotor-Blechpakete.**

(30) Priorität: 13.08.85 DE 3529050

(43) Veröffentlichungstag der Anmeldung:
04.03.87 Patentblatt 87/10

(45) Bekanntmachung des Hinweises auf die Patenterteilung:
27.09.89 Patentblatt 89/39

(84) Benannte Vertragsstaaten:
CH DE IT LI

(56) Entgegenhaltungen:
DD-A- 96 808
DE-A- 2 212 250
DE-A- 2 907 261

PATENT ABSTRACTS OF JAPAN, Band 9,
Nr. 75 (E-306)[1798], 4th April 1985; & JP - A - 59 209 042

(73) Patentinhaber: Siemens Aktiengesellschaft,
Wittelsbacherplatz 2, D-8000 München 2(DE)

(72) Erfinder: Pfaffenzeiler, Willi, Mühlwiesenweg 9,
D-8709 Rimpar(DE)
Erfinder: Betz, Horst, Breslauerstrasse 6,
D-8705 Zellingen(DE)

## Beschreibung

Die Erfindung bezieht sich auf eine Paketierungsvorrichtung für Blechpakete, insbesondere für geschränkte Rotor-Blechpakete, gemäß Oberbegriff des Anspruchs 1; eine derartige Vorrichtung ist allgemein bekannt (siehe z.B. DE-A 2 907 261).

Bei der bekannten Vorrichtung sind als Führungsöffnungen in eine entsprechende Grundplatte vier Bohrungen eingebohrt, in die zylindrische Einfädelstifte eingesteckt und z.B. über sich leicht konisch erweiternde Enden festgeklemmt werden. Insbesondere bei der Erstellung einer Paketierungsvorrichtung für geschränkte Blechpakete mit zur Erzielung der gewünschten Schränkung schräg zur Auflagefläche der Grundplatte gehaltenen Einfädelstiften ergeben sich für die schräg zu bohrenden Führungsöffnungen große Schwierigkeiten, da die Lagebestimmung der Bohrungen und damit die Halterung der Einfädelstifte relativ zur Grundplatte von zwei Ebenen aus vorgenommen werden muß; dabei führen geringste Abweichungen der Bohrungen einer Grundplatte durch die Gegenläufigkeit der Einfädelstifte dazu, daß die gesamte Vorrichtung unbrauchbar wird.

Aufgabe der vorliegenden Erfindung ist es daher, eine Paketierungsvorrichtung, insbesondere zur maschinellen Stapelung geschränkter Blechpakete, zu schaffen, bei der die Führungsöffnungen für die Einfädelstifte auf einfache Weise erstellt und die entsprechend der beabsichtigten Schränkung des Blechpaketes notwendigen Schrägstellungen sämtlicher Einfädelstifte mit hinreichender Genauigkeit gewährleistet werden können.

Die Lösung der Aufgabe gelingt bei einer Paketierungsvorrichtung der eingangs genannten Art durch die Lehre des Patentanspruchs 1; vorteilhafte Ausgestaltungen der Erfindung sind Gegenstand der Unteransprüche.

Die erfindungsgemäße Vorrichtung mit ihrer Aufteilung der Führungsaufnahme für die Einfädelstifte in eine Grundplatte mit von ihrem Außendurchmesser her eingebrachten offenen Einlegenuten für die Einfädelstifte und ihrem Verschluß dieser Grundplatte und zugleich der zusätzlichen Fixierung der Einfädelstifte in den Einlegenuten durch den übergestülpten Verschlußring erlaubt in einfacher Weise, insbesondere bei der maschinellen Stapelung eines geschränkten Blechpaketes, die Übertragung der errechneten Schrägstellung für die Einfädelstifte auf den Außenumfang der Grundplatte und das anschließende insbesondere maschinelle Einschleifen bzw. Einfräsen sämtlicher Einlegenuten und damit der darin zu halternden Einfädelstifte einer Vorrichtung in richtiger und genau eingehaltener Ausrichtung relativ zueinander und zur Auflagefläche der Grundplatte.

Die Erfindung sowie weitere vorteilhafte Ausgestaltungen werden im folgenden anhand eines schematisch dargestellten Ausführungsbeispiels in der Zeichnung näher erläutert; darin zeigen:

Fig. 1 eine Paketierungsvorrichtung in einer perspektivischen Explosions-Darstellung,

Fig. 2 eine axiale Draufsicht auf die blechpaketseitige Boden-Aufnahmefläche der Grundplatte der Paketierungsvorrichtung gemäß Fig.1,

Fig. 3 die Paketierungsvorrichtung gemäß Fig.1 nach ihrem Zusammenbau und mit einem bereits teilweise gestapelten Blechpaket.

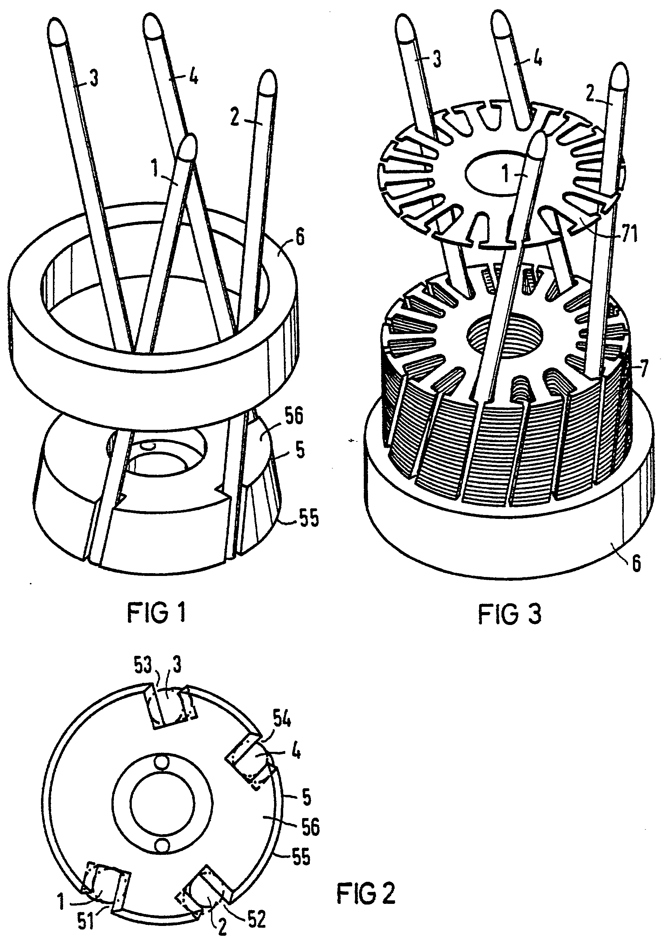

Fig.1 zeigt in einer perspektivischen Explosions-Darstellung eine Paketiervorrichtung, die im wesentlichen aus einer Grundplatte 5, aus Einfädelstiften 1-4 und aus einem bei fertig montierter Paketiervorrichtung mit seinem inneren Umfang an dem Außenumfang der Grundplatte 5 und den Einfädelstiften 1-4 anliegenden Abschlußring 6 besteht.

Wie aus Fig.1 und Fig.2 ersichtlich, sind zur Aufnahme der Einfädelstifte 1-4 in die Grundplatte 5 von deren Außenumfangsfläche her Einlegenuten 51-54, z.B. durch maschinelles Einschleifen oder Einfräsen, eingebracht. Die Einfädelstifte 1-4 sind von der Unterseite 55 der Grundplatte 5 her eingesteckt und mittels ihrer gegenüber der lichten Weite der Einlegenuten 51-54 leicht konisch erweiterten Enden durch Einklemmen vorfixiert. Zur endgültigen geführten Lagesicherung der Einfädelstifte 1-4 in den Einlegenuten 51-54 der Grundplatte 5 dient der Verschlußring 6, der von der Oberseite 56 her über die Außenumfangsfläche der Grundplatte 5 geschoben wird und mit seiner Innenfläche gegen die Außenfläche der entsprechend in die Einlegenuten 51-54 eingebrachten und ausgebildeten Einfädelstifte 1-4 anliegt bzw. andrückt.

Fig.3 zeigt die fertigmontierte Paketiervorrichtung mit bereits mehreren zu einem Teil-Blechpaket 7 gestapelten und paketierten Einzel-Blechlamellen. Das derart gestapelte Teil-Blechpaket 7 ist mit einer Schränkung versehen, derart daß die Nuten nicht in einer Achse senkrecht zur Oberseite 56 der Grundplatte 5 sondern in einem bestimmten Winkel schräg zu der Oberseite 56 verlaufen. Der obere Teil der Fig.3 zeigt ein einzelnes Blech 71, das beim Paketierungsvorgang auf die freien Enden der Einfädelstifte (1-4) aufgesteckt entlang der Einfädelstifte in die gemäß der Schränkung vorgesehene Position zum unteren bereits gestapelten Teil-Blechpaket geleitet bzw. gedrückt wird.

Zur Gewährleistung der richtigen Führung der Blechlamellen entlang der Einfädelstifte zu einem mit einer bestimmten Schränkung versehenen Blechpaket einerseits und zum sicheren Andruck des Verschlußringes 6 über die gesamte Höhe der in den Einlegenuten 51-54 eingesteckten Enden der Einfädelstifte 1-4 ist es nicht nur erforderlich, die radiale Einschleif- bzw. Einfrästiefe der Einlegenuten 51-54 dem Durchmesser der zylindrischen Einfädelstifte 1-4 entsprechend anzupassen sondern es ist außerdem gemäß einer Ausgestaltung der Erfindung vorgesehen, die Grundplatte 5 und den Verschlußring 6 kegelstumpfartig mit einem der Schrägung und damit der schrägen Ausrichtung der Einfädelstifte 1-4 angepaßten Schrägungswinkel zu versehen. Die Schrägung ist sowohl aus Fig.1 als auch aus Fig.2 durch den unterschiedlichen Durchmesser der Oberseite 56 im Verhältnis zur Unterseite 55 der Grundplatte 5 ersichtlich.

## Patentansprüche

1. Paketierungsvorrichtung für Blechpakete (7), insbesondere für geschränkte Rotor-Blechpakete, mit in Führungsöffnungen (51–54) einer Grundplatte (5) mit ihrem einen Ende gehaltenen Einfädelstiften (1–4), deren andere freien Enden in Nuten der aufgesteckten, zu einem Blechpaket zu stapelnden Blechlamellen greifen, **dadurch gekennzeichnet**, daß die Führungsöffnungen als Einlegenuten (51-54) für die Einfädelstifte (1-4) von der Außenumfangsfläche der Grundplatte (5) her radial eingebracht sind.

2. Paketierungsvorrichtung nach Anspruch 1, **dadurch gekennzeichnet**, daß die Einfädelstifte (1-4) in die Einlegenuten (51-54) eingeklemmt sind.

3. Paketierungsvorrichtung nach Anspruch 1 und/oder Anspruch 2, **dadurch gekennzeichnet**, daß die Einlegenuten (51-54) nach radial außen durch einen die Grundplatte (5) umgreifenden und/oder an den Einfädelstiften (1-4) anliegenden Verschlußring (6) verschlossen sind.

4. Paketierungsvorrichtung nach einem der Ansprüche 1 bis 3, **dadurch gekennzeichnet**, daß die Einlegenuten (51-54) in die Grundplatte (5) eingeschliffen sind.

5. Paketierungsvorrichtung nach einem der Ansprüche 1 bis 3, **dadurch gekennzeichnet**, daß die Einlegenuten (51-54) in die Grundplatte (5) eingefräst sind.

6. Paketierungsvorrichtung nach einem der Ansprüche 1 bis 5, **dadurch gekennzeichnet**, daß die Einlegenuten (51-54) über die gesamte Höhe der Außenumfangsfläche der Grundplatte (5) gleichartig eingebracht sind.

7. Paketierungsvorrichtung, insbesondere für geschränkte Blechpakete, nach einem der Ansprüche 1 bis 6, **dadurch gekennzeichnet**, daß die Grundplatte (5) und der Verschlußring (6) kegelstumpfartig mit einem im Sinne einer vollständigen Anlage des Verschlußringes (6) an den Einfädelstiften (1-4) dem Schränkungswinkel angepaßten Schrägungswinkel ausgebildet sind.

## Claims

1. Stacking arrangement for laminated rotor cores (7), more particularly for skewed laminated rotor cores, having threading pins (1–4), which are held with their one end in guide openings (51–54) of a base plate (5) and the other free ends of which engage into grooves of the slipped-on sheet laminations which are to be piled up to form a laminated rotor core, characterised in that the guide openings are introduced radially, as insertion grooves (51–54) for the threading pins (1–4), from the outer peripheral surface of the base plate (5).

2. Stacking arrangement according to claim 1, characterised in that the threading pins (1–4) are clamped into the insertion grooves (51–54).

3. Stacking arrangement according to claim 1, and/or claim 2, characterised in that the insertion grooves (51–54) are closed radially outwards by means of a closing ring (6) which encompasses the base plate (5) and/or rests against the threading pins (1–4).

4. Stacking arrangement according to one of the claims 1 to 3, characterised in that the insertion grooves (51–54) are ground into the base plate (5).

5. Stacking arrangement according to one of the claims 1 to 3, characterised in that the insertion grooves (51–54) are milled into the base plate (5).

6. Stacking arrangement according to one of the claims 1 to 5, characterised in that the insertion grooves (51–54) are introduced uniformly over the whole height of the outer peripheral surface of the base plate (5).

7. Stacking arrangement, more particularly for skewed laminated rotor cores, according to one of the claims 1 to 6, characterised in that the base plate (5) and the closing ring (6) are formed in the manner of a truncated cone with an angle of slope which is adapted to the angle of skew, for the purposes of complete installation of the closing ring (6) on the threading pins (1–4).

## Revendications

1. Dispositif d'empilage pour des paquets de tôles (7), notamment pour des paquets de tôles d'un rotor, décalés en oblique, comportant des broches d'enfilage (1–4), dont des premières extrémités sont maintenues dans des ouvertures de guidage (51–54) d'une plaque de base (5) et dont les autres extrémités libres s'engagent dans des rainures des lamelles de tôle enfichées, devant être empilées pour former un paquet de tôles, caractérisé par le fait que les ouvertures de guidage sont disposées de manière à s'étendre radialement à partir de la surface périphérique extérieure de la plaque de base (5), sous la forme de rainures (51–54) d'insertion pour les broches d'enfilage (1–4).

2. Dispositif d'empilage suivant la revendication 1, caractérisé par le fait que les broches d'enfilage (1–4) sont bloquées par serrage dans les rainures d'insertion (51–54).

3. Dispositif d'empilage suivant la revendication 1 et/ou 2, caractérisé par le fait que les rainures d'insertion (51–54) sont fermées vers l'extérieur du point de vue radial, par un anneau de fermeture (6) entourant la plaque de base (5) et/ou s'appliquant contre les broches d'enfilage (1–4).

4. Dispositif d'empilage suivant l'une des revendications 1 à 3, caractérisé par le fait que les rainures d'insertion (51–54) sont formées par meulage dans la plaque de base (5).

5. Dispositif d'empilage suivant l'une des revendications 1 à 3, caractérisé par le fait que les rainures d'insertion (51–54) sont ménagées par fraisage dans la plaque de base (5).

6. Dispositif d'empilage suivant l'une des revendications 1 à 5, caractérisé par le fait que les rainures d'insertion (51–54) sont formées avec la même configuration sur toute la hauteur de la surface périphérique extérieure de la plaque de base (5).

7. Dispositif d'empilage, notamment pour des paquets de tôles décalés en oblique, suivant l'une des revendications 1 à 6, caractérisé par le fait que la plaque de base (5) et l'anneau de fermeture (6) possèdent une forme tronconique, avec un angle d'inclinaison adapté à l'angle de décalage oblique, pour l'obtention d'une application complète de l'anneau de fermeture (6) contre les broches d'enfilage (1–4).

FIG 1

FIG 3

FIG 2